# EUROPEAN PATENT SPECIFICATION

(11) **EP 2 749 069 B1**
(45) Date of publication and mention of the grant of the patent: **01.05.2019**
(21) Application number: 11873600.8
(22) Date of filing: 07.10.2011
(51) Int. Cl.: H04W 28/14, H04L 12/70, H04L 12/26, H04L 12/835, H04L 12/801

(54) **METHODS PROVIDING PACKET COMMUNICATIONS INCLUDING JITTER BUFFER EMULATION AND RELATED NETWORK NODES**
VERFAHREN ZUR PAKETÜBERTRAGUNG MIT JITTER-PUFFEREMULATION UND ENTSPRECHENDE NETZWERKKNOTEN
PROCÉDÉS FOURNISSANT DES COMMUNICATIONS PAR PAQUETS COMPRENANT UNE ÉMULATION DE TAMPON D'INSTABILITÉ ET N UDS DE RÉSEAU CORRESPONDANTS

(43) Date of publication of application: 02.07.2014
(73) Proprietor: Telefonaktiebolaget LM Ericsson (publ), 164 83 Stockholm (SE)
(72) Inventor: BERTZE, Åsa, S-163 52 Spånga (SE); KUIVINEN, Fredrik, S-121 52 Johanneshov (SE); DA SILVA, Icaro L. J., S-195 21 Sollentuna (SE); FU, Jing, S-171 70 Solna (SE)
(74) Representative: Brann AB
(86) International application number: PCT/SE2011/051204
(87) International publication number: WO 2013/051975

(56) References cited:
- EP-A1- 1 919 137
- WO-A1-2009/070093
- WO-A1-2011/076239
- WO-A1-2011/076239
- US-A1- 2006 077 994
- US-A1- 2008 165 766
- US-A1- 2011 075 577

## Description

### TECHNICAL FIELD

The present disclosure is directed to communications and, more particularly, to packet communications and related methods, devices, and computer program products.

### BACKGROUND

In a typical cellular radio system, wireless terminals (also referred to as user equipment unit nodes, UEs, and/or mobile stations) communicate via a radio access network (RAN) with one or more core networks. The RAN covers a geographical area which is divided into cell areas, with each cell area being served by a radio base station (also referred to as a RAN node, a "NodeB", and/or enhanced NodeB "eNodeB"). A cell area is a geographical area where radio coverage is provided by the base station equipment at a base station site. The base stations communicate through radio communication channels with wireless terminals within range of the base stations.

With mobile networks evolving from circuit-switched (CS) only networks (e.g., according to GSM or Global System for Mobile Communications technologies), to hybrid circuit-switched and packet-switched (PS) networks (e.g., according to 3G/HSPA or Third Generation High-Speed Downlink Packet Access technologies) to packet-switched (PS) only networks (e.g., according to LTE or Long Term Evolution technologies), the delivery of telephony services over mobile networks is changing. Packet switched telephony services over LTE, for example, may use Voice over Internet Protocol (VoIP) for radiotelephone voice conversations. Maintenance of high quality voice communications in such a VoIP network may be desirable because users continue to expect quality similar to that of circuit-switched networks. Accordingly, VoIP quality monitoring of speech reproduction at wireless terminals may be desired so that proper action can be taken in the event that VoIP quality at the wireless terminal is not satisfactory.

In a VoIP packet-switched radiotelephone conversation, for example, a microphone at the transmitting device converts sound (e.g., voice) into an analog electrical signal, and an analog-to-digital converter converts the analog electrical signal into a digital signal. Segments of the digital signal are then separated into Internet Protocol (IP) data packets that are transmitted separately over the network (e.g., an LTE radiotelephone network) between the transmitting device and the receiving device (e.g., between two radiotelephone devices). Each IP data packet is transmitted separately, and different IP data packets may follow different paths between the transmitting and receiving devices. Accordingly, different IP data packets of the same VoIP signal may be subject to different delays through the network, so that the IP data packets are not received in a steady stream at the receiving device. Such differences in arrival times of IP data packets at the receiving device may be referred to as "jitter."

In a packet-switched network, a receiving device may include a jitter buffer (also referred to as a de-jitter buffer) that is used to counter jitter by providing a buffer or queue of received IP data packets so that a continuous (or more nearly continuous) play-out of received audio (or video) may be provided. Such a jitter buffer may thus compensate for variations of transmission delay through the network for different IP data packets received at the receiving device, but a jitter buffer may further delay play-out of each IP packet/frame at the receiving device, introducing an additional delay for end-to-end flow (also referred to as mouth-to-ear delay).

If a jitter buffer delays all IP data packets long enough to allow an IP data packet with a highest expected transport delay to arrive before its scheduled play-out time, the receiving device may properly reconstruct the intended analog signal. Applying a jitter buffer delay to accommodate a highest expected transport delay, however, may cause an undesirably long mouth-to-ear delay for a radiotelephone conversation. On the other hand, if a jitter buffer delay is too short (or non-existent), variations in network delay may cause some IP data packets to arrive too late for their respective scheduled play-out times resulting in interruptions of the reproduced speech.

Accordingly, a VoIP jitter buffer algorithm may be designed so that data packet play-out delay is reduced, while still allowing most IP data packets to arrive in time for their respective scheduled play-outs. IP data packets arriving too late for their scheduled play-out are referred to as late losses. Storing a greater number of IP data packets in a jitter buffer (i.e., increasing a size of the jitter buffer) may thus reduce a likelihood of late-losses, at the expense of increasing an overall mouth-to-ear delay. Conversely, storing a lesser number of IP data packets in a jitter buffer (i.e., reducing a size of the jitter buffer) may reduce an overall mouth-to-ear delay at the expense of increasing a likelihood of late-losses.

A size of a jitter buffer may define a number of IP data packets (also referred to as frames) that may be queued in the jitter buffer. A static jitter buffer may have a fixed size, while an adaptive jitter buffer may have a capability to dynamically adjust its size to balance the delay/late-loss tradeoff. An adaptive jitter buffer may continuously adjust its size according to measurements of jitter for previous IP data packets in the flow. An adaptive jitter buffer uses measurements of IP data packet arrival times and current jitter buffer status to determine a desired jitter buffer size. When increased jitter is detected, for example, jitter buffer size may be increased to reduce a likelihood of late-losses, and when reduced jitter is detected, jitter buffer size may be reduced to reduce voice-to-mouth delay. The reduction/increase of buffer size may be accomplished by compressing or expanding some speech data packets/frames during play-out (referred to as time scaling) at the expense of further impairments to the quality of the reproduced speech. Third Generation Partnership Project (3GPP) LTE standards define some minimum requirements for a jitter buffer algorithm in a wireless terminal for a Multimedia Telephony Service for IP Multimedia System (MTSI). An exact algorithm used by a wireless terminal, however, may not necessarily be defined by 3GPP LTE.

An end-user quality of a VoIP media flow (e.g., voice and/or video) may depend on multiple factors including packet/frame error rate, impairments due to time scaling, impairments due to end-to-end delay, impairments due to late-losses, etc. To determine a quality of a VoIP flow, packet/frame error rate, time scaling, late-losses, and/or end-to-end delay may be measured and used to generate a measure of quality according to a quality model. Moreover, such a measure of quality may be generated at the end user device (e.g., at the receiving wireless terminal) where error rates, time scaling, late-losses, and end-to-end delays may be most accurately determined.

Standardization of terminal reporting of VoIP quality parameters is discussed, for example, by Bernstein et al., in "DSLHome Provisioning Parameters for VoIP CPE," DSL Forum, TR-104, September 2005. If no terminal measurements are available, network reports may be used to estimate VoIP quality. An eNB, for example, may provide reports based on numbers of packets lost and/or based on numbers of packets delivered later than a specified packet delay budget (i.e., a period of time allowed from the time that a packet arrives at the eNB until it is transmitted to the wireless terminal).

VoIP quality estimation based on terminal reporting may provide more accurate results, but terminal reporting is not a mandatory feature according to the LTE standard, and not all wireless terminals can be expected to report such measurements in the near future. Accordingly, network operators may have to rely on network measurements to estimate VoIP media quality. Measurements currently available at the network (e.g., packet loss, packet delays through the RAN, etc.) may not easily translate to an accurate VoIP quality score (such as a Mean Opinion Score or MOS).

By way of example, if the RAN delay budget (i.e., the time budgeted for data packet transmission through the RAN) is 80ms and if all data packets are delayed by 100 ms, then all the data packets are delayed 20 ms over the budgeted delay, and 0% of the data packets will be delivered within the delay budget. This situation, however, is not likely to be a problem for VoIP voice reproduction at the receiving wireless terminal because the delay is constant. In another situation, if most packets are delivered with a 30 ms RAN delay but suddenly some packets are delivered with an 80 ms RAN delay, all data packets may be delivered within the delay budget, but the relatively high jitter may cause jitter buffer under-run at the wireless terminal so that the relatively delayed data packet(s) may be lost even though received within the time budget. Monitoring of data packet delay vs. budgeted delay may thus: incorrectly indicate low VoIP quality when all data packets are consistently delayed beyond the delay budget; and incorrectly indicate high VoIP quality when data packets delays are significantly variable but within the delay budget. Accordingly, packet delay monitoring at the network may provide unreliable estimates of VoIP quality.

Document US 2011/075577 A1 discloses a network simulator in a packet-based network for testing performance of a de-jitter buffer associated with a communication device such as VoIP phone. Document WO 2011/076239 A1 discloses a base station configured to estimate a processing delay at the base station, a transmission delay between the base station and a mobile station, and play-out delay for a play-out buffer of the mobile device for scheduling downlink data packets.

### SUMMARY

It is therefore an object to address at least some of the above mentioned disadvantages and/or to improve performance in a communication system supporting VoIP communications.

According to some embodiments, packet communications may be provided over a wireless channel between a radio network node and a wireless terminal, and the wireless terminal may include a jitter buffer configured to reduce jitter resulting from different delays of data packets received at the wireless terminal. Operation of the jitter buffer for the wireless terminal may be emulated responsive to data packet transmissions from the radio network node to the wireless terminal based on packet delivery information of the data packet transmissions from the radio network node to the wireless terminal. Responsive to emulating operation of the jitter buffer for the wireless terminal, a parameter of emulated operation of the jitter buffer may be provided including at least one of an emulated late packet loss occurrence, an emulated wireless terminal time scaling occurrence, an emulated jitter buffer fill level, and/or an emulated jitter buffer fill level threshold.

By emulating operation of the wireless terminal jitter buffer at a radio network node (such as a radio base station supporting the radio link with the wireless terminal), the radio access network may track a quality of communications received/reproduced at the wireless terminal without requiring wireless terminal reporting of such jitter buffer performance parameters. Moreover, network based jitter buffer emulation may allow tracking of wireless terminal jitter buffer performance without requiring increased radio channel traffic and/or wireless terminal operational overhead. Such information may be used at the radio access network to track performance/quality of particular communications with wireless terminals, to track aggregate radio access network performance, to modify data packet transmission scheduling to reduce jitter buffer under-run and/or time scaling at the wireless terminal, to modify network operations to improve aggregate network operations, to allocate network resources, etc.

According to other embodiments, a radio network node in a radio access network may include a transceiver and a processor. The transceiver may be configured to provide communications over a wireless channel between the radio network node and a wireless terminal with the wireless terminal including a jitter buffer configured to reduce jitter resulting from different delays of data packets received at the wireless terminal. The processor is coupled to the transceiver with the processor being configured to emulate operation of the jitter buffer for the wireless terminal responsive to data packet transmissions from the radio network node through the transceiver to the wireless terminal based on packet delivery information of the data packet transmissions from the radio network node to the wireless terminal. The processor may be further configured to provide a parameter of emulated operation of the jitter buffer including at least one of an emulated late packet loss occurrence, an emulated wireless terminal time scaling occurrence, an emulated jitter buffer fill level, and/or an emulated jitter buffer fill level threshold responsive to emulating operation of the jitter buffer for the wireless terminal.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:
Figure 1 is a block diagram of a communication system that is configured according to some embodiments;
Figure 2 is a block diagram of a base station and a wireless terminal (UE) in communication over a wireless channel according to some embodiments of Figure 1;
Figure 3 is a block diagram of a jitter buffer that may be implemented by a wireless terminal processor of Figure 2;
Figure 4 is a block diagram illustrating elements of a base station processor of Figure 2; and
Figures 5A, 5B, 6A, 6B, 7A, 7B, and 7C are flow charts illustrating operations of a base station processor of Figure 2.

### DETAILED DESCRIPTION

The invention will now be described more fully hereinafter with reference to the accompanying drawings, in which examples of embodiments of the invention are shown. This invention may, however, be embodied in many different forms and should not be construed as limited to the embodiments set forth herein. Rather, these embodiments are provided so that this disclosure will be thorough and complete, and will fully convey the scope of the present invention to those skilled in the art. It should also be noted that these embodiments are not mutually exclusive. Components from one embodiment may be tacitly assumed to be present/used in another embodiment.

For purposes of illustration and explanation only, these and other embodiments of the present invention are described herein in the context of operating in a Radio Access Network (RAN) that communicates over radio communication channels with wireless terminals (also referred to as UEs). It will be understood, however, that the present invention is not limited to such embodiments and may be embodied generally in any type of communication network. As used herein, a wireless terminal or UE can include any device that receives data from a communication network, and may include, but is not limited to, a mobile telephone ("cellular" telephone), laptop/portable computer, pocket computer, handheld computer, and/or desktop computer.

In some embodiments of a RAN, several base stations can be connected (e.g., by landlines or radio channels) to a radio network controller (RNC). The radio network controller, also sometimes termed a base station controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) technology. UTRAN, short for UMTS Terrestrial Radio Access Network, is a collective term for the Node B's and Radio Network Controllers which make up the UMTS radio access network. Thus, UTRAN is essentially a radio access network using wideband code division multiple access for UEs.

The Third Generation Partnership Project (3GPP) has undertaken to further evolve the UTRAN and GSM based radio access network technologies. In this regard, specifications for the Evolved Universal Terrestrial Radio Access Network (E-UTRAN) are ongoing within 3GPP. The Evolved Universal Terrestrial Radio Access Network (E-UTRAN) comprises the Long Term Evolution (LTE) and System Architecture Evolution (SAE).

Note that although terminology from 3GPP (3^{rd} Generation Partnership Project) LTE (Long Term Evolution) is used in this disclosure to exemplify embodiments of the invention, this should not be seen as limiting the scope of the invention to only these systems. Other wireless systems, including WCDMA (Wideband Code Division Multiple Access), WiMax (Worldwide Interoperability for Microwave Access), UMB (Ultra Mobile Broadband), HSDPA (High-Speed Downlink Packet Access), GSM (Global System for Mobile Communications), etc., may also benefit from exploiting embodiments of the present invention disclosed herein.

Also note that terminology such as base station (also referred to as eNodeB or Evolved Node B) and wireless terminal (also referred to as UE or User Equipment) should be considering non-limiting and does not imply a certain hierarchical relation between the two. In general a base station (e.g., an "eNodeB") and a wireless terminal (e.g., a "UE") may be considered as examples of respective different communications devices that communicate with each other over a wireless radio channel. While embodiments discussed herein may focus on wireless transmissions in a downlink from an eNodeB to a UE, embodiments of the invention may also be applied, for example, in the uplink.

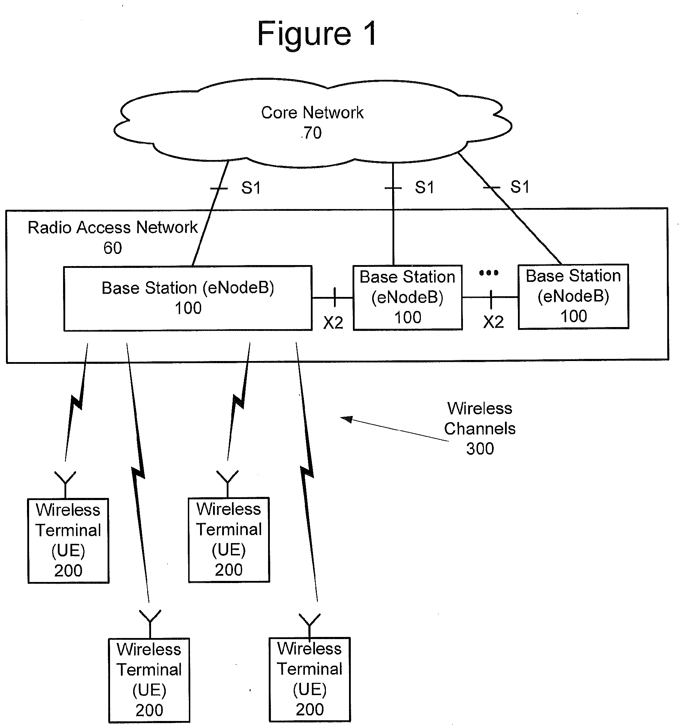

Figure 1 is a block diagram of a communication system that is configured to operate according to some embodiments of the present invention. An example RAN 60 is shown that may be a Long Term Evolution (LTE) RAN. The LTE RAN is a variant of a 3GPP RAN where radio base stations (e.g., eNodeBs) 100 are connected directly to one or more core networks 70 rather than to radio network controller (RNC) nodes. In LTE, the functions of a radio network controller (RNC) node are performed by the radio base stations 100. The radio base stations 100 communicate over wireless channels 300 with wireless terminals (also referred to as user equipment nodes or UEs) 200 that are within their respective communication service cells (also referred to as coverage areas). The radio base stations 100 can communicate with one another through an X2 interface(s) and with the core network(s) 70 through S1 interfaces, as is well known to one who is skilled in the art.

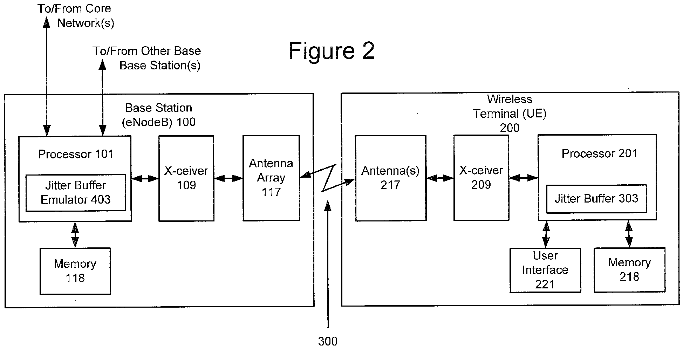

Figure 2 is a block diagram of a base station 100 and a wireless terminal 200 of Figure 1 in communication over a wireless channel 300 according to some embodiments of the present invention. As shown, base station 100 may include transceiver 109 coupled between processor 101 (including jitter buffer emulator 403) and antenna(s) 117 (e.g., an antenna array including multiple antennas), and memory 118 coupled to processor 101. Moreover, wireless terminal 200 may include transceiver 209 coupled between antenna(s) 217 (e.g., an antenna array including multiple antennas) and processor 201 (including adaptive jitter buffer 303), and user interface 221 (e.g., including one or more of a display, a touch sensitive screen, a keypad, a microphone, a speaker, etc.) and memory 218 may be coupled to processor 201. Accordingly, base station 100 may transmit communications through transceiver 109 and antenna array 117 for reception at wireless terminal 200 through antenna(s) 217 and transceiver 209, and wireless terminal 200 may transmit communications though transceiver 209 and antenna(s) 217 for reception at base station 100 through antenna(s) 117 and transceiver 109.

More particularly, base station 100 may be configured to support VoIP radiotelephone communications between wireless terminal 200 and another communications device. For example, the other communications device may be another wireless terminal in a coverage area of base station 100 that is wirelessly coupled to base station 100, the other communications device may be coupled to base station 100 through another base station and an X2 interface between the two base stations, the other communications device may be coupled to base station 100 through core network 70, etc. IP Data packets may thus be transmitted from the other communications device to wireless device 200 through base station 100, through another base station and base station 100, through core network 70 and base station 100, etc. Moreover, different IP data packets of the same VoIP communication may be received from the other communications device at wireless terminal 200 with different delays resulting in jitter.

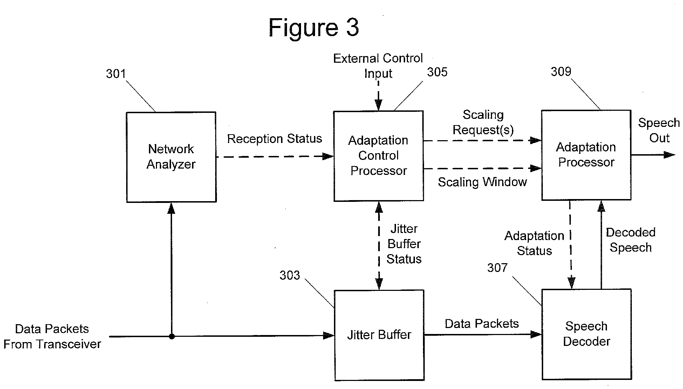

Processor 201 of wireless terminal 200 may thus include jitter buffer 303 as discussed above to provide improve a quality of speech reproduction. Elements of processor 201 that may support adaptive jitter buffering (including jitter buffer 303 and related control elements) are illustrated in Figure 3 in accordance with 3GPP TS 26.114, V11.0.0, Chapter 8, "Jitter Buffer Management In MTSI Clients In Terminals," (2011-06), pages 41-45. More particularly, jitter buffer 303 may receive data packets from base station 100 (through transceiver 209), and jitter buffer 303 may provide these data packets (also referred to as frames) to speech decoder 307 to generate decoded speech. The decoded speech may be provided to adaptation processor 309 where time scaling may be applied as appropriate before generating the analog electrical signal for a speaker of user interface 221. With adaptive jitter buffering, a size of jitter buffer 303 may change to accommodate different jitter situations. In periods of increased jitter, for example, a size of jitter buffer 303 may increase (thereby increasing jitter buffer delay and increasing a resulting mouth-to-ear delay), and in periods reduced jitter, a size of jitter buffer 303 may be reduced (thereby reducing jitter buffer delay and reducing a resulting mouth-to-ear delay). More particularly, operations of jitter buffer 303 (including adjusting a size thereof) may be controlled by network analyzer 301 and/or adaptation control processor 305.

Jitter buffer 303 unpacks incoming IP data packets (e.g., Real-Time Protocol or RTP payloads) from transceiver 209 and stores the received speech packets/frames. Moreover, the status (e.g., size, fill level, minimum/maximum fill level threshold, etc.) of jitter buffer 303 may be provided as input to adaptation control processor 305. In addition, jitter buffer 303 may be linked to speech decoder 307 to provide speech packets/frames for decoding when requested for decoding. Network analyzer 301 may monitor the stream of incoming IP data packets from transceiver 209 and generate reception statistics (e.g., jitter, packet late-losses, etc.) responsive to the stream of incoming data packets. As shown, the reception statistics may be provided to adaptation control processor 305 as input information used to control jitter buffer 303.

Adaptation control processor 305 may make decisions regarding buffering delay adjustments and/or playback delay responsive to jitter buffer status (e.g., average buffering delay, buffer fill level, buffer size, etc.) from jitter buffer 303 and reception statistics from network analyzer 301. Moreover, external control input can be used, for example, to enable inter-media synchronization or other external scaling requests. Adaptation control processor 305 may use different adaptation strategies such as providing fixed jitter buffer (without adaptation and time scaling), providing simple adaptation during comfort noise periods, and/or providing buffer adaptation also during active speech.

Speech decoder 307 may be implemented as an AMR (Adaptive Multi-Rate) or AMR-WB (Adaptive Multi-Rate WideBand) speech decoder. Moreover, speech decoder 307 may include error concealment and/or bad packet/frame handling functionality, and/or speech decoder 307 may be used with or without adaptation processor 309.

Adaptation processor 309 may shorten or extend an output signal length to provide time scaling according to scaling requests from adaptation control processor 305 to facilitate a relatively transparent adjustment of jitter buffer delay. Adaptation processor 309 may perform time scaling using packet/frame based or sample based time scaling on the output of speech decoder 307 during comfort noise periods only or during active speech and comfort noise. Adaptation control processor 305 may have a mechanism to limit a maximum scaling ratio. Providing a scaling window in which the targeted time scale modifications are performed may allow flexibility in allocation of a scaling request over several packets/frames.

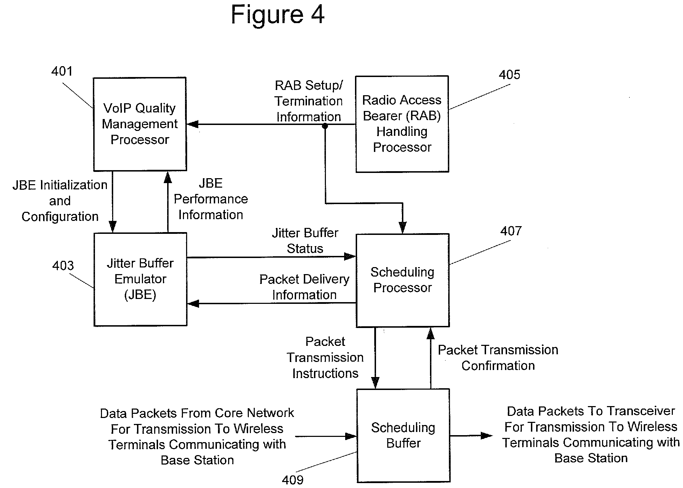

To monitor a quality of VoIP speech reproduced at wireless terminal 200, base station processor 101 may include jitter buffer emulator 403 as shown in Figure 2. Jitter buffer emulator 403 and other elements of processor 101 supporting operation of jitter buffer emulator 403 are illustrated in Figure 4. Such a network based jitter buffer emulator (JBE) 403 may thus be used to measure/emulate jitter buffer parameters/status to provide a reliable estimate of quality of VoIP speech reproduction at wireless terminal 200. Jitter buffer emulator 403 may thus be located within network 70 at a position relatively close to wireless terminal 200. For example, JBE 403 may be located in/at a base station 100 (such as an eNB in an LTE network or in a NodeB of a WCDMA network) providing service for wireless terminal 200. While jitter buffer emulator 403 is illustrated as an element of base station processor 101 for purposes of illustration, jitter buffer emulator 403 and/or functionality thereof may be implemented in base station 100 outside of processor 101, jitter buffer emulator 403 and/or functionality thereof may be implemented in RAN 60 outside of base station 100, etc.

As discussed in greater detail below, jitter buffer emulator 403 may initiate jitter buffer emulation (also referred to as providing a jitter buffer emulator) for each VoIP communication processed through base station 100. Stated in other words, jitter buffer emulator 403 may initiate a different jitter buffer emulator for each wireless terminal 200 receiving VoIP speech data packets from base station 100. Jitter buffer emulator 403 may thus provide a mirror of jitter buffer 303 of wireless terminal 200, and JBE 403 may thus provide emulation responsive to each VoIP data packet transmitted from base station 100 to wireless terminal 200. For example, JBE 403 may emulate/measure a packet late-loss rate as well as time scaling occurrences experienced at wireless terminal 200, and these measures may be used to provide reliable estimates of quality of VoIP speech reproduced at wireless terminal 200, and/or to schedule/reschedule subsequent VoIP data packet transmission to wireless terminal 200.

To emulate/monitor operation of jitter buffer 303 at wireless terminal 200, jitter buffer emulator 403 may be implemented at radio base station 100, which is the network node closest to wireless terminal 200. By providing jitter buffer emulator 403 at base station 100 with which wireless terminal 200 is communicating, jitter buffer emulation may be based on the most accurate and timely information that is available to RAN 70 (e.g., based on transmission of VoIP data packets from base station 100 to wireless terminal 200 and/or receipt of delivery notifications such as ACK/NACK messages from wireless terminal 200). While jitter buffer emulator 403 and/or functionality thereof may be provided in base station processor 101 according to some embodiments, jitter buffer emulator 403 and/or functionality thereof may be provided in base station 100 outside of processor 101, in RAN 70 outside of base station 100, etc.

As shown in Figure 4, processor 101 may include jitter buffer emulator (JBE) 403, VoIP quality management processor 401, radio access bearer (RAB) handling processor 405, scheduling buffer 409, and scheduling processor 407. VoIP quality management processor 401 may be responsible for identifying VoIP data packet flows from base station 100 to different wireless terminals 200, and initiating jitter buffer emulation (at jitter buffer emulator 403) for each wireless terminal 200 receiving a VoIP data packet flow from base station 100. For each such jitter buffer emulation (at jitter buffer emulator 403), VoIP quality management processor 401 may be configured to collect performance parameters from the respective jitter buffer emulation that may be used to estimate a quality of VoIP speech reproduced at the respective wireless terminal 200 using jitter buffer 303. Moreover, VoIP quality management processor 401 may be configured to report these performance parameters to a network node where a quality model may be implemented to objectively model a quality of all VoIP communications being handled by base station 100 and/or other base stations. Moreover, VoIP quality management processor 401 may be configured to provide a status (e.g., including one or more of jitter buffer fill level, size, minimum/maximum fill level threshold, etc.) of the jitter buffer emulator 403 to another base station during a hand-off of wireless terminal 200 from base station 100 to another base station.

In a 3GPP LTE radio access network, for example, RAB handling processor 405 can determine when a radio link (e.g., an Evolved Radio Access Bearer or E-RAB) for wireless terminal 200 should be initiated/terminated. RAB handling processor 405, for example, may initiate a radio link with wireless terminal 200 responsive to a request from wireless terminal 200 to establish a new communication with another communication device, responsive to a request from another communication device to establish a new communication with wireless terminal 200 (currently in a service area of base station 100), responsive to a request from another base station (referred to as a source base station) to hand-off an ongoing communication with wireless terminal 200 to base station 100, etc. RAB handling processor 405 may terminate an ongoing communication between wireless terminal 200 and another communication device responsive to a termination request from wireless terminal 200, responsive to termination request from the other communication device, responsive to handing-off the ongoing communication to another base station (referred to as a destination base station), etc.

Responsive to initiating a communication with wireless terminal 200, RAB handling processor 405 may transmit a RAB setup notice to VoIP management processor 401, and a setup request (from wireless terminal 200, from the other communication device, from the other base station, etc.) may include a Quality of Service Class Identifier (QCI), that can be used to identify VoIP data communications. Upon receipt of a RAB setup notice and a QCI indicating that the communication is a VoIP communication, VoIP management processor 401 may determine whether to monitor a quality of this VoIP communication. Such a determination may be based on a service/subscription level of wireless terminal 200 (e.g., whether wireless terminal 200 has a service/subscription agreement guaranteeing a higher level of service that requires VoIP quality monitoring), a random decision (e.g., based on statistical sampling) to provide system level statistical monitoring based on a subset of all users, etc. If VoIP quality management processor 401 determines that the VoIP communication with wireless terminal 200 should be monitored, jitter buffer emulation at JBE 403 is initiated for wireless terminal 200 for the new VoIP communication.

If the communication with wireless terminal 200 is a new communication, jitter buffer emulation is initiated for wireless terminal 200 using an initial status based on a zero jitter buffer fill level. If the communication with wireless terminal 200 is a hand-off of an existing communication from another (source) base station, jitter buffer emulation is initiated based on a status (e.g., jitter buffer fill level, size, maximum/minimum fill level threshold, etc.) of jitter buffer emulation received from the other (source) base station. Stated in other words, jitter buffer emulation is initiated at base station 100 in a state corresponding to that of jitter buffer emulation from the source base station that originated the hand-off. VoIP quality management processor 401 may also configure how the jitter buffer emulation should collect performance parameters for the communication (e.g., with what time granularity statistics should be collected/reported).

JBE 403 may report performance information to VoIP quality management processor 401 over the course of the communication, and VoIP quality management processor 401 may forward this performance information (or information relating thereto) to another network node/element for generation of an objective media quality model for the VoIP communication with wireless terminal 200. Information estimating a quality/performance of the communication at wireless terminal 200 may be used, for example, to monitor performance of RAN 60, to modify operation of RAN 60, to schedule/reschedule data packet flows through RAN 60 and/or base station 100, to schedule/reschedule data packet transmissions of the VoIP communication from base station 100 to wireless terminal 200, etc.

Upon termination of the VoIP communication between wireless terminal 200 and base station 100, RAB handling processor 405 may transmit a RAB release message to VoIP quality management processor 401, and VoIP quality management processor 401 may terminate jitter buffer emulation for wireless terminal 200 at JBE 403. If the RAB release message is generated responsive to a hand-off of the ongoing communication with wireless terminal 200 to another (destination) base station, VoIP quality management processor 401 may collect current status information (e.g., jitter buffer size, fill level, minimum/maximum fill level threshold, etc.) of jitter buffer emulation for wireless terminal 200 and forward this status information to the other destination base station before terminating jitter buffer emulation.

JBE 403 may thus model/emulate jitter buffer 303 of wireless terminal 200 in real time. Because operation of wireless terminal jitter buffer 303 may be primarily responsive to reception times that VoIP data packets are received at wireless terminal 200, base station JBE 403 may be primarily responsive to times that the VoIP data packets are transmitted from base station 100 to wireless terminal 200. Accordingly, scheduling processor 407 (controlling operation of scheduling buffer 409) may provide packet delivery information (e.g., including data packet transmission times) and/or packet acknowledge/negative-acknowledge (or ACK/NACK) messages (e.g., Hybrid Automatic Repeat Request or HARQ ACK/NACK messages received from wireless terminal 200) to jitter buffer emulator JBE 403. Jitter buffer emulator 403 may this be informed when each data packet is transmitted to wireless terminal 200 (based on the data packet transmission times), and for each data packet, whether the data packet is received by the wireless terminal (e.g., as indicated by an ACK message) or lost (as indicated by a NACK message).

When a data packet is successfully received at jitter buffer 303 (of wireless terminal 200), its arrival time can be used by jitter buffer 303 (and/or network analyzer 301 and/or adaptation control processor 305) to calculate a maximum buffer size needed to reach a pre-configured target late-loss rate. Moreover, wireless terminal processor 201 may initiate transmission of an ACK message to base station 100 to acknowledge successful receipt of the packet. When the ACK message is received at base station 100 (from wireless terminal 200) indicating that a data packet was successfully received at wireless terminal 200, jitter buffer emulator 403 can use the transmission time for the data packet (when the data packet was transmitted from base station 100) to update the status information (e.g., emulated buffer size, fill level, minimum/maximum fill level threshold, etc.) of jitter buffer emulation for wireless terminal 200. The status information and/or elements thereof can then be added to a histogram. In contrast, when a data packet is not successfully received at wireless terminal 200 (e.g., because a number of errors exceeds a threshold), wireless terminal processor 201 may initiate transmission of a NACK message to base station 100, and base station scheduling processor 407 may attempt retransmission of the data packet. Scheduling processor 407 may thus withhold packet delivery information from JBE 403 until an ACK message is received acknowledging successful receipt of the data packet at wireless terminal 200. Once an ACK message is received for a data packet, scheduling processor 407 may forward packet delivery information for the data packet to JBE 403 (including a time that the packet was transmitted from base station 100).

When a radio link is established between base station 100 and wireless terminal 200, VoIP Quality Management Processor 401 instructs JBE 403 to initiate an emulator for wireless terminal 200, and the emulator for wireless terminal 200 is initialized using information provided by VoIP Quality Management Processor 401 (e.g., a zero fill level if the radio link is for a new communication or a fill level provided by a source base station if the radio link is for a hand-off of an ongoing communication). Moreover, the JBE 403 may configure the emulator for wireless terminal 200 to generate performance parameter measurements emulating performance parameters of jitter buffer 303 at wireless terminal 200.

Each time a VoIP data packet is successfully delivered to (and received at) wireless terminal 200 (as indicated to JBE 403 by packet delivery information from scheduling processor 407 of base station processor 101), the jitter buffer emulator for wireless terminal 200 updates its status in accordance with the applicable jitter buffer characteristics (corresponding to characteristics of wireless terminal jitter buffer 303). The jitter buffer emulator for wireless terminal 200 may also estimate if any buffer adjustment may be needed based, for example, on historic jitter distribution.

The jitter buffer emulator for wireless terminal 200 may also emulate consumption of speech frames by wireless terminal speech decoder 307 (without decoding or playing out any speech). The jitter buffer emulator for wireless terminal 200 may also emulate the need for any time scaling at wireless terminal 200, and/or jitter buffer under-run resulting in packet loss at wireless terminal jitter buffer 303 and/or speech decoder 307. The jitter buffer emulator for wireless terminal 200 may save emulated performance parameters (e.g., packet loss rate, time scaling occurrences, etc.) and/or report these emulated performance parameters to VoIP Quality Management Processor 401.

JBE 403 may be configured to implement different jitter buffer emulation types (e.g., algorithms) to match a particular jitter buffer type (e.g., algorithm) of wireless terminal jitter buffer 303. For example, a number of known wireless terminal jitter buffer types may be allowed/supported, and a unique jitter buffer identifier may be used to identify each of the types. Accordingly, wireless terminal 200 may transmit its jitter buffer identifier to base station 100 when the radio link is established, and JBE 403 may use this jitter buffer identifier when initiating jitter buffer emulation for wireless terminal 200 so that jitter buffer emulation for wireless terminal 200 matches the wireless terminal jitter buffer 303. According to other embodiments, JBE 403 may implement a single jitter buffer emulation type that is used for all wireless terminals. Even though different wireless terminals may implement slightly different jitter buffers, all such different jitter buffers may be compliant with 3GPP LTE so that differences may be relatively insignificant and a same jitter buffer emulation type/algorithm may be sufficient.

As discussed above, jitter buffer emulation at base station 100 may be used to provide VoIP quality estimation for speech reproduced at wireless terminal 200. According to some embodiments, jitter buffer emulation may be used to schedule/reschedule data packet transmissions from base station 100 to wireless terminal 200 and/or to other wireless terminals in communication with base station 100. VoIP quality at wireless terminal 200, for example, may be improved by increasing the number of data packets that are received at wireless terminal 200 in time for its scheduled play-out, and this timing is dependent on the current depth/size and fill level of jitter buffer 303, none of which are constant. At base station 100, transmission of data packets from scheduling buffer 409 to wireless terminal 200 and to other wireless terminals may normally be based on the respective times that the data packets have been delayed in scheduling buffer 409. Stated in other words, scheduling buffer 409 may operate as a first-in-first-out buffer so that data packets are transmitted in the same order that they are received at scheduling buffer 409. According to some embodiments, scheduling processor 407 may alter transmission scheduling priorities/orders of data packets in scheduling buffer responsive to status of jitter buffer emulations for wireless terminals 200 in communication with base station 100.

To increase a number of data packets that arrive at wireless terminal 200 in time for scheduled play-out, scheduling processor 407 may thus consider a status of the jitter buffer emulation for wireless terminal 200 when scheduling/rescheduling data packet transmissions to wireless terminal 200. In response to the jitter buffer emulation for wireless terminal 200 detecting an approaching under-run situation (e.g., with an insufficient number of data packets in jitter buffer 303), for example, scheduling processor 407 may reschedule a next data packet(s) in scheduling buffer for more immediate transmission to wireless terminal 200. Stated in other words, a next data packet for wireless terminal 200 may be moved ahead of data packets for other wireless terminals that were received at scheduling buffer 409 ahead of the next data packet for wireless terminal 200. According to other embodiments, scheduling processor 407 may proactively take action to increase a size and/or fill level of jitter buffer 303 before handing-off an ongoing communication with wireless terminal 200 to another base station. Accordingly, a likelihood of under-run (i.e., running out of data packets) during a hand-off outage may be reduced.

According to embodiments discussed herein, a quality of reproduction of VoIP communications received at a wireless terminal may be monitored with relatively high accuracy without requiring wireless terminal reporting. By emulating wireless terminal jitter buffering at the network, performance parameter measurements may be implemented at one place for all wireless terminals communication with a base station, and a relatively accurate objective quality model may be obtained. In addition, a VoIP scheduling buffer may schedule VoIP data packet transmissions to wireless terminals more efficiently based on jitter buffer emulation to reduce the likelihood of under-run situations and to reduce impact of hand-off outages.

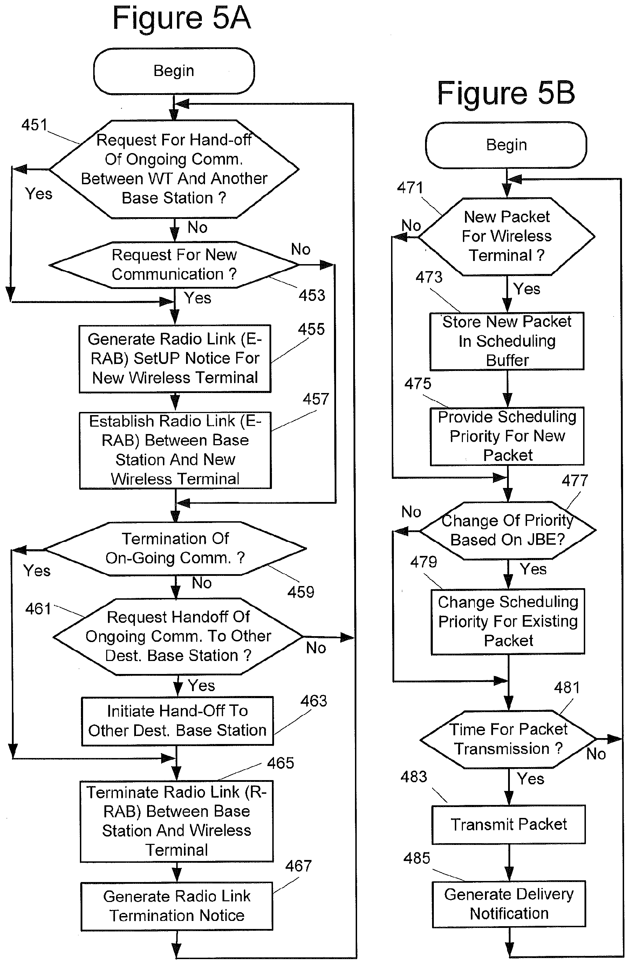

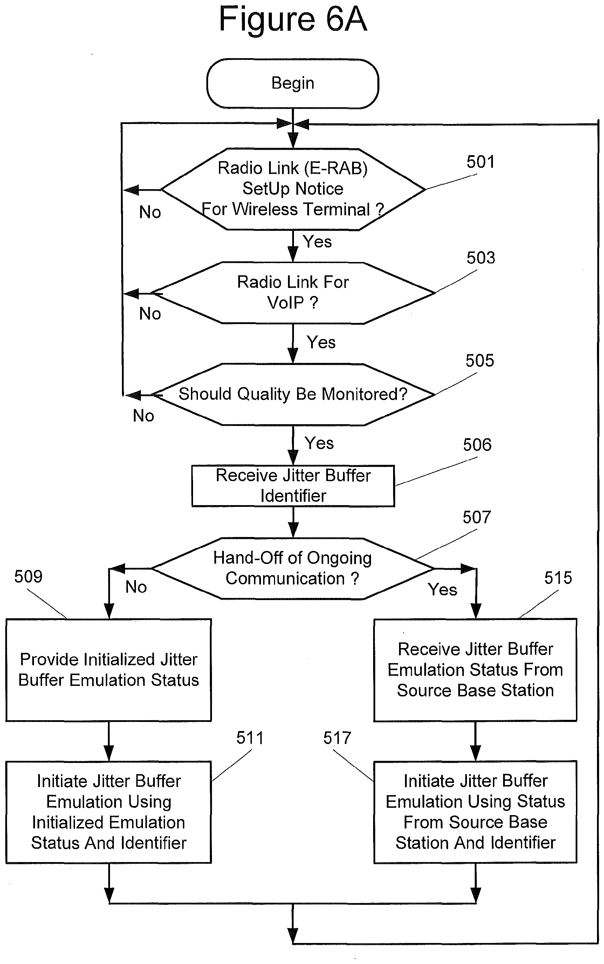

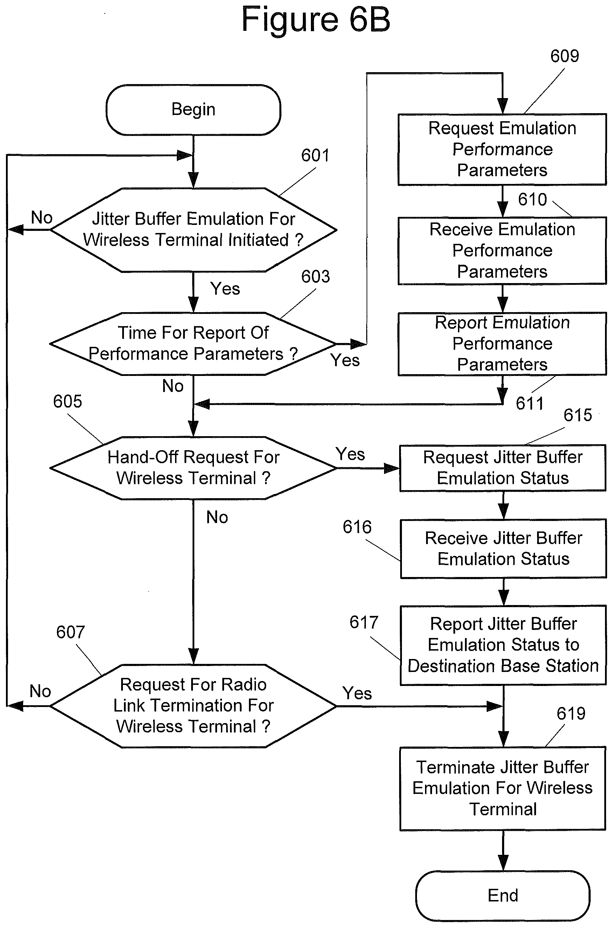

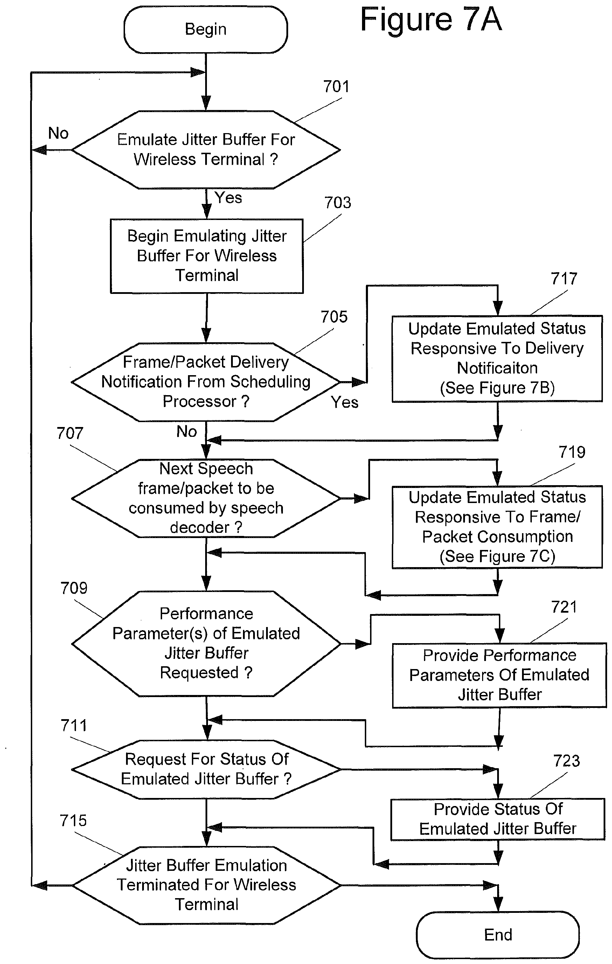

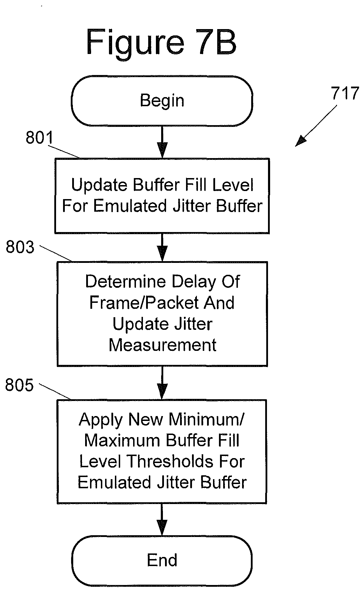

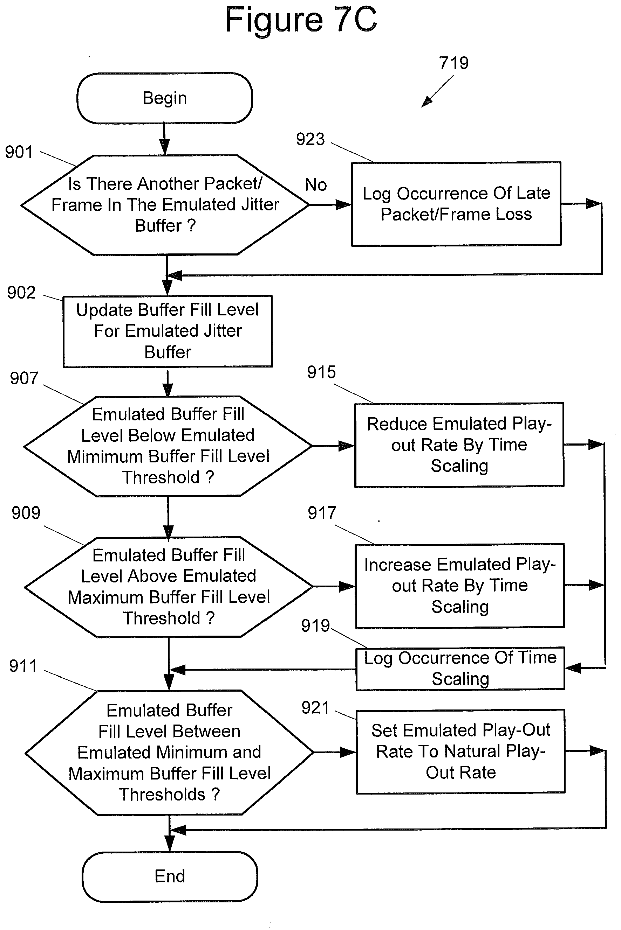

Embodiments of the present invention will now be discussed with respect to the flow charts of Figures 5A, 5B, 6A, 6B, 6C, 7A, and 7B illustrating operations of base station processor 101 and elements thereof. More particularly, Figures 5A and 5B are flow charts illustrating operations of RAB handling processor 405, scheduling processor 407, and/or scheduling buffer 409 of Figure 4; Figures 6A and 6B are flow charts illustrating operations of VoIP Quality Management Processor 401 of Figure 4; and Figures 7A, 7B, and 7C are flow charts illustrating operations of Jitter Buffer Emulator (JBE) 403 of Figure 4.

As shown in Figure 5A, RAB Handling Processor 405 (of base station processor 101) may manage initiation and/or termination of radio links with wireless terminals in a coverage area (also referred to as a cell) serviced by base station 100. At block 451, RAB Handling Processor 405 may monitor for receipt of requests for hand-off of an ongoing communication between a wireless terminal and another source base station. A hand-off may occur, for example, when a wireless terminal involved in an ongoing communication (e.g., a VoIP radiotelephone call) supported by a neighboring base station moves into the coverage area/cell of base station 101. At block 453, RAB Handling Processor 405 may monitor for receipt of requests for a new communication between base station 100 and a wireless terminal currently in a coverage area or cell serviced by base station 100. Such a request may occur when a wireless terminal in a coverage area/cell of base station 101 initiates or accepts a communication (e.g., a VoIP radiotelephone call).

Responsive to a request for either type of communication, RAB Handling Processor 405 may generate a radio link (e.g., E-RAB) setup notice at block 455 and establish a radio link (E-RAB) between base station 100 and wireless terminal 200 at block 457. As discussed in greater detail below, the radio link setup notice may be provided to VoIP Quality Management Processor 401. More particularly, the radio link setup notice may include an identification of the radio link and/or wireless terminal, a Quality of Service Class Identifier (QCI) identifying a type of communication (e.g., if the communication is a real time data packet communication such as a VoIP communication), an identification of a jitter buffer emulator type used by the wireless terminal, an existing jitter buffer status (if the communication is an ongoing communication being handed-off from a source base station), etc.

At block 459 RAB Handling Processor 405 may monitor for receipt of requests to terminate an ongoing communication between a wireless terminal and base station 100. At block 461, RAB handling processor 405 may monitor for requests to hand-off an ongoing communication with a wireless terminal to another destination base station. In response to a hand-off request at block 461, RAB handling processor 405 may initiate the hand-off to the destination station at block 463. In response to either a termination request at block 459 or a hand-off request at block 461, RAB handling processor 405 may terminate the radio link between base station 100 and the wireless terminal associated with the request at block 465, and RAB handling processor 405 may generate a radio link termination notice at block 467. As discussed in greater detail below, the termination notice may be provided to VoIP quality management processor 401, and responsive to the termination notice, VoIP quality management processor 401 may terminate jitter buffer emulation at JBE 403 for the wireless terminal associated with the termination notice. If the termination notice is the result of a hand-off, VoIP quality management processor 401 may also forward a status of jitter buffer emulation (e.g., including buffer size, fill level, minimum/maximum fill level thresholds, time for consumption of a next data packet/frame, etc.) to the destination base station.

RAB handling processor 405 may thus continuously monitor for requests to support new communications at base station 100 and to terminate existing communications with base stations. Responsive to these requests, RAB handling processor 405 may provide setup and termination notices to VoIP quality management processor 401 allowing VoIP quality management processor 401 to setup/maintain/terminate jitter buffer emulations for each wireless terminal conducting VoIP communications (or other real time data packet communications) through base station 100.

As shown in Figure 5B, scheduling processor 407 and/or scheduling buffer 409 may process data packets for transmission to wireless terminals communicating through base station 100. At block 471, scheduling buffer 409 may receive a new packet for transmission to a wireless terminal that is communicating through base station 100. Scheduling buffer 409 may receive data packets for all wireless terminals communicating through base station 100, and any such data packets may be received from another wireless terminal communicating directly through base station 100, from another base station over an X2 interface, from core network 70 over an S1 interface, etc. Upon receipt of each new data packet at block 471, scheduling buffer 409 may store the data packet at block 473, and provide an initial scheduling priority for the data packet at block 473. The initial scheduling priority, for example, may be based on an order in which the data packet is received so that a new data packet is initially scheduled for transmission after transmission of all other data packets received at scheduling buffer 409 before the new data packet.

As discussed above, a scheduling priority of one or more data packets in scheduling buffer 409 that are to be transmitted to wireless terminal 200 may be changed responsive to a status of jitter buffer emulation for wireless terminal 200 and/or responsive to jitter buffer emulation for another wireless terminal or terminals communicating with base station 100. If jitter buffer emulation for wireless terminal 100 indicates that jitter buffer 303 of wireless terminal 200 may be approaching an under-run condition (e.g., that its buffer fill level is below a minimum buffer fill level threshold), scheduling processor 407 may receive jitter buffer status information from JBE 403 indicating the approaching under-run condition for wireless terminal 200. At block 477, scheduling processor 407 may thus detect a need to change a scheduling priority for a data packet or packets to be transmitted to wireless terminal 200 in response to the approaching under-run condition, and at block 479, scheduling processor may change the scheduling priority for the next data packet or packets for transmission to wireless terminal 200 by advancing the packet or packets in the queue of scheduling buffer 409 relative to packets for transmission to other wireless terminals. In contrast, if jitter buffer emulation for another wireless terminal(s) indicates an approaching under-run condition at the other wireless terminal(s), scheduling processor 407 may advance packets for the other wireless terminal(s) effectively changing scheduling priorities for data packets for wireless terminal 200 by delaying their scheduled transmissions.

At block 481, scheduling buffer 409 determines if it is time to transmit a data packet to a wireless terminal (e.g., wireless terminal 200) in accordance with current scheduling priorities, and if so, the data packet is transmitted to the appropriate wireless terminal at block 483. When transmitting a data packet to wireless terminal 200, for example, wireless terminal 200 will respond with either an ACK message indicating that the data packet was successfully received or with a NACK message indicating that the data packet was not successfully received. Responsive to receiving an ACK message from wireless terminal 200 at base station 100, scheduling processor 407 may generate a packet delivery notification (including an identification of the transmitted data packet and the transmission time) that is provided to JBE 200 to allow updating of jitter buffer emulation for wireless terminal 200. Responsive to non-receipt of an ACK message for the data packet or responsive to receipt of a NACK message for the data packet, scheduling processor may schedule a retransmission of the data packet to wireless terminal 200. Scheduling processor 407 and/or scheduling buffer 409 may thus schedule/reschedule data packet transmissions to wireless terminal 200 responsive to jitter buffer emulation for wireless terminal 200 and other wireless terminals.

As shown in Figure 6A, VoIP Quality Management Processor 401 may initiate jitter buffer emulation for wireless terminal 200 and/or other wireless terminals responsive to radio link (E-RAB) setup notices from RAB handling processor 405. If a radio link setup notice is received by VoIP quality management processor 401 at block 501, VoIP quality management processor 401 may determine at block 503 whether the radio link is for a VoIP (or other real time) data packet communication. As discussed above, a Quality of Service Class Identifier (QCI) may be used to identify whether the radio link is for a VoIP (or other real time) data packet communication. If the radio line is for a real time data packet communication at block 503, VoIP quality management processor 401 may determine at block 505 whether jitter buffer emulation should be performed for the radio link. According to some embodiments, jitter buffer emulation may be selectively provided for wireless terminals associated with subscription/service agreements that guarantee a higher level of quality, or jitter buffer emulation may be randomly provided to allow statistical sampling for monitoring of general network performance. According to some other embodiments, jitter buffer emulation may be provided for all real time data packet communications handled by base station 100.

If VoIP quality management processor 401 determines at blocks 501, 503, and 505 that the new radio link is for a VoIP (or other real time) data packet communication and that jitter buffer emulation should be used to monitor its quality, VoIP quality management processor 401 may then proceed with initiating jitter buffer emulation for the radio link. As discussed above according to some embodiments, different wireless terminals may use different jitter buffer types/algorithms and JBE 403 may support emulation using different emulation types/algorithms corresponding to the different jitter buffer types/algorithms used by the different wireless terminals. Accordingly, VoIP quality management processor 401 may be configured to receive a jitter buffer identifier at block 506 identifying a jitter buffer type/algorithm used by the wireless terminal for which the radio link is being established. Such a jitter buffer identifier may be received at base station 100 from the wireless terminal and RAB handling processor 405 may forward the jitter buffer identifier to VoIP quality management processor 401 with the radio link setup notice. According to other embodiments, block 506 may be omitted if only one emulator type is provided by JBE 403, either because all wireless terminals use a same jitter buffer type/algorithm or because different jitter buffer types/algorithms used by different wireless terminals are sufficiently similar.

At block 507, VoIP quality management processor 401 may determine if the new radio link is for a new communication or for a hand-off of an ongoing communication from another (source) base station. If the new radio link is for a new communication, VoIP quality management processor 401 may provide an initialized jitter buffer emulation status (e.g., with a jitter buffer fill level of zero) at block 509, and VoIP quality management processor 401 may instruct JBE 403 to initiate jitter buffer emulation for the new radio link using the initialized emulation status and the jitter buffer identifier at block 511. If the new radio link is for a hand-off of an ongoing communication from another source base station, VoIP quality management processor 401 may receive a jitter buffer emulation status (e.g., including jitter buffer size, fill level, minimum/maximum fill level threshold, time for consumption of a next data packet/frame, etc.) provided by the source base station at block 515, and VoIP quality management processor 401 may instruct JBE 403 to initiate jitter buffer emulation for the new radio link using the emulation status from the source base station and the jitter buffer identifier at block 517. Operations of Figure 6A may thus be repeated for each new radio link that is established between base station 100 and a wireless terminal.

For each jitter buffer emulation that is initiated by VoIP quality management processor 401 according to operations of Figure 6A, VoIP quality management processor 401 may manage jitter buffer emulation for a radio link according to operations of Figure 6B. Once jitter buffer emulation is initiated for a radio link at block 601, VoIP quality management processor 401 may determine at block 603 if it is time for a report of performance parameters, VoIP quality management processor 401 may determine at block 605 if a hand-off request has been generated at block 605, and VoIP quality management processor 401 may determine at block 607 if a request for radio link termination has been generated.

Once a radio link has been established between base station 100 and wireless terminal 200 and jitter buffer emulation has been initiated at JBE 403 at block 601, VoIP quality management processor 401 may determine at block 603 whether performance parameters for the jitter buffer emulation should be reported. At each reporting interval, for example, VoIP quality management processor 401 may request performance parameters (e.g., including emulated late packet loss occurrences, emulated time scaling occurrences, emulated jitter buffer fill level, and/or emulated minimum/maximum jitter buffer fill level thresholds) at block 609, the requested performance parameters may be received from JBE 403 at block 610, and the emulated performance parameters may be reported to an objective quality monitor (which may be included as an element of base station processor 101, as an element of base station outside 100 processor 101, as an element of RAN 60 outside of base station 100, etc.) at block 611. According to other embodiments, VoIP quality management processor 401 may request performance parameters on an as needed basis. According to still other embodiments performance parameters may be pushed from JBE 403 without requiring a request from VoIP quality management processor 401. JBE 403, for example, may push performance parameters responsive to changes in one or more of the performance parameters and/or periodically.

If the radio link for wireless terminal 200 is to be handed-off from base station 100 (as a hand-off source base station) to another base station (as a hand-off destination base station) at block 605, VoIP quality management processor 401 may request a status (e.g., jitter buffer size, fill level, minimum/maximum fill level thresholds, time to next data packet consumption, etc.) of jitter buffer emulation for wireless terminal 200 at block 615. VoIP quality management processor 401 may then receive the status of jitter buffer emulation at block 616, report the status to the destination base station at block 617, and then terminate jitter buffer emulation for wireless terminal 200 at block 619. If the radio link for wireless terminal 200 is to be terminated (e.g., responsive to wireless terminal 200 hanging up) at block 607, jitter buffer emulation for wireless terminal 200 may be terminated at block 619.

Figures 7A, 7B, and 7C are flow charts illustrating operations of JBE 403 that may occur responsive to VoIP quality management processor 401 as discussed above with respect to Figures 6A and 6B. Once VoIP quality management processor 401 provides instructions to provide jitter buffer emulation for wireless terminal 200 at block 701, JBE 403 may begin jitter buffer emulation for wireless terminal 200 at block 703. As discussed above, JBE 403 may separately emulate jitter buffers for each wireless terminal receiving real time data packet communications from base station 100. Each time JBE 403 receives a packet delivery notification (indicating transmission of a packet to wireless terminal 200) from scheduling processor 407 at block 705, JBE 403 may update a status (e.g., jitter buffer size, fill level, minimum/maximum fill level thresholds, time until a next data packet consumption, etc.) of jitter buffer emulation for wireless terminal at block 717 (as discussed in greater detail below with respect to Figure 7B). Each time JBE 403 determines that a next data packet/frame is to be consumed jitter buffer 303 of wireless terminal 200 at block 707, JBE 403 may update a status (e.g., jitter buffer size, fill level, minimum/maximum fill level thresholds, time until a next data packet consumption, etc.) of jitter buffer emulation for wireless terminal at block 719 (as discussed in greater detail below with respect to Figure 7C).

When VoIP quality management processor 401 requests performance parameters (e.g., late packet loss occurrences, time scaling occurrences, jitter buffer fill level, minimum/maximum jitter buffer fill level threshold, etc.) of jitter buffer emulation for wireless terminal at block 709, JBE 403 may respond at block 721 by providing the requested parameters of emulated jitter buffer performance for wireless terminal 200. As discussed above, VoIP quality management processor 401 may request these parameters periodically, JBE 403 may push these parameters periodically, and/or JBE 403 may push these parameters responsive to changes in one or more of the performance parameters.

If VoIP quality management processor 401 requests a status of jitter buffer emulation for wireless terminal 200 at block 711 (e.g., in preparation for a hand-off to another destination base station), JBE 403 may respond at block 723 with the requested status (e.g., jitter buffer size, fill level, minimum/maximum fill level threshold, time until a next data packet/frame consumption, etc.). At block 715, JBE 403 may continue operations of jitter buffer emulation for wireless terminal 200 until VoIP quality management processor 401 provides an instruction that the emulation should be terminated (e.g., responsive to hand-off of wireless terminal 200 to another base station and/or termination of the communication with wireless terminal 200).

Operations of block 717 will now be discussed in greater detail below with respect to Figure 7B. Upon receipt of a packet delivery notification from scheduling processor 407 indicating transmission of a data packet to wireless terminal 200, JBE 403 may update a fill level of the emulated jitter buffer for wireless terminal 200 at block 801. At block 803, JBE 403 may then determine the delay of the current packet and update an internal jitter measurement (e.g., a jitter histogram), which is used as input to determine a needed jitter buffer size and/or new minimum/maximum buffer fill level thresholds in order to reach a desired late-loss rate. The JBE 403 may then apply new minimum/maximum buffer fill level thresholds for the emulated jitter buffer for wireless terminal 200 at block 805.

Operations of block 719 will now be discussed in greater detail below with respect to Figure 7C. Upon emulated consumption of a data packet/frame by the emulated jitter buffer for wireless terminal 200, JBE 403 may determine if there is another data packet/frame in the emulated jitter buffer at block 901. If the emulated jitter buffer is empty at block 901, JBE 403 may log an occurrence of late packet/frame loss (also referred to as under-run) for wireless terminal 200 at block 923. JBE 403 may then update a fill level of the emulated jitter buffer for wireless terminal 200 at block 902. At blocks 907, 909, and 911, JBE 403 may determine if the current emulated buffer fill level is below the emulated minimum buffer fill level threshold, above the emulated buffer fill level threshold, or between the emulated minimum and maximum buffer fill level thresholds. If the current emulated buffer fill level is below the emulated minimum buffer fill level at block 907, JBE 403 may reduce an emulated play-out rate of jitter buffer emulation for wireless terminal 200 by time scaling at block 915 and log an occurrence of time scaling at block 919. Stated in other words, JBE 403 may reduce the emulated play-out rate of jitter buffer emulation by expanding the emulated play-out of one or more data packets/frames to emulate reproduction of output speech from the one or more data packets/frames over a longer period of time than the period of time over which the speech for the one or more data packets/frames actually occurred. If the current emulated buffer fill level is above the emulated maximum buffer fill level at block 909, JBE 403 may increase an emulated play-out rate of jitter buffer emulation for wireless terminal 200 by time scaling at block 917 and log an occurrence of time scaling at block 919. Stated in other words, JBE 403 may increase the emulated play-out rate of jitter buffer emulation by compressing the emulated play-out of one or more data packets/frames to emulate reproduction of output speech from the one or more data packets/frames over a shorter period of time than the period of time over which the speech for the one or more data packets/frames actually occurred. If the current emulated buffer fill level is between the emulated minimum and maximum buffer fill levels at block 911, JBE 403 may set/maintain an emulated play-out rate of jitter buffer emulation for wireless terminal 200 at a natural play-out rate at block 921. Stated in other words, JBE 403 may provide the emulated play-out rate of jitter buffer emulation without expansion or compression to emulate reproduction of output speech from the one or more data packets/frames over a period of time that is substantially the same as the period of time over which the speech for the one or more data packets/frames actually occurred.

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein. While VoIP data packet communications are discussed by way of example, embodiments may be implemented for other real time data packet communications such as audio and/or video streaming.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of the invention. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present invention. All such variations and modifications are intended to be included herein within the scope of the present invention. Accordingly, the above disclosed subject matter is to be considered illustrative, and not restrictive, and the appended claims are intended to cover all such modifications, enhancements, and other embodiments, which fall within the scope of the present invention. Thus, to the maximum extent allowed by law, the scope of the present invention is to be determined by the broadest permissible interpretation of the following claims, and shall not be restricted or limited by the foregoing detailed description.

## Claims

1. A method providing packet communications over a wireless channel (300) between a radio network node (100) and a wireless terminal (200), wherein the wireless terminal (200) includes a jitter buffer (303) configured to reduce jitter resulting from different delays of data packets received at the wireless terminal (200), the method comprising:
emulating, (703, 705, 717, 707, 719), by the radio network node, operation of the jitter buffer (303) for the wireless terminal (200) responsive to data packet transmissions from the radio network node (100) to the wireless terminal (200) based on packet delivery information of the data packet transmissions from the radio network node to the wireless terminal; and
responsive to emulating operation of the jitter buffer (303) for the wireless terminal (200), providing (721), by the radio network node, a parameter of emulated operation of the jitter buffer (303) including at least one of an emulated late packet loss occurrence, an emulated wireless terminal time scaling occurrence, an emulated jitter buffer fill level, and/or an emulated jitter buffer fill level threshold.

2. The method according to Claim 1 wherein emulating operation of the jitter buffer (303) comprises, updating (801) the emulated jitter buffer fill level responsive to transmitting a data packet from the radio network node (100) to the wireless terminal (200).

3. The method according to Claim 2 wherein updating (801) the emulated jitter buffer fill level further comprises: updating (801) the emulated jitter buffer fill level responsive to an acknowledge message and/or a negative acknowledge message received at the radio network node (100) from the wireless terminal (200) for the data packet.

4. The method according to any one of Claims 1-3 wherein emulating operation of the jitter buffer (303) further comprises, computing (803) a buffer fill level threshold.

5. The method according to any one of Claims 1-4 wherein emulating operation of the jitter buffer (303) comprises, reducing (915) an emulated play-out rate responsive to a minimum buffer level threshold exceeding the emulated buffer fill level, and/or increasing (917) an emulated play-out rate responsive to an emulated buffer fill level exceeding a maximum buffer level threshold.

6. The method according to any one of Claims 1-5 wherein providing the parameter of the emulated jitter buffer (303) comprises generating a log including at least one of emulated late packet loss occurrences, emulated time scaling occurrences, emulated jitter buffer fill levels, and/or emulated jitter buffer fill level thresholds.

7. The method according to Claim 6 wherein providing the parameter of the emulated jitter buffer further comprises estimating a quality of communications reproduced at the wireless terminal (200) responsive to generating the log.

8. The method according to any one of Claims 1-7 wherein the packet communications comprise Voice over Internet Protocol, VoIP, packet communications, and wherein the data packets comprise VoIP data packets.

9. The method according to any one of Claims 1-8 further comprising: receiving (506) a jitter buffer identifier at the radio network node (100) from the wireless terminal (200) identifying one of a plurality of jitter buffer types, wherein emulating operation of the jitter buffer (303) comprises emulating operation of the jitter buffer (303) using an emulator selected responsive to the jitter buffer identifier received at the radio network node (100).

10. A radio network node (100) in a radio access network (60) providing packet communications, the radio network node (100) comprising:
a transceiver (109) configured to provide communications over a wireless channel (300) between the radio network node (100) and a wireless terminal (200), wherein the wireless terminal (200) includes a jitter buffer (303) configured to reduce jitter resulting from different delays of data packets received at the wireless terminal (200); and
a processor (101) coupled to the transceiver (109) wherein the processor (101) is configured to emulate operation of the jitter buffer (303) for the wireless terminal (200) responsive to data packet transmissions from the radio network node (100) through the transceiver 109 to the wireless terminal (200) based on packet delivery information of the data packet transmissions from the radio network node to the wireless terminal, and wherein the processor (101) is further configured to provide a parameter of emulated operation of the jitter buffer (303) including at least one of an emulated late packet loss occurrence, an emulated wireless terminal time scaling occurrence, an emulated jitter buffer fill level, and/or an emulated jitter buffer fill level threshold responsive to emulating operation of the jitter buffer (303) for the wireless terminal (200).

11. The radio network node (100) according to Claim 10 wherein the processor (101) is further configured to emulate operation of the jitter buffer (303) by updating the emulated jitter buffer fill level responsive to transmitting a data packet from the radio network node (100) to the wireless terminal (200).

12. The radio network node (100) according to Claim 11 wherein the processor (101) is configured to update the emulated jitter buffer fill level by updating the emulated jitter buffer fill level responsive to an acknowledge message and/or a negative acknowledge message received through the transceiver (109) from the wireless terminal (200) for the data packet.

13. The radio network node (100) according to any one of Claims 10-12 wherein the processor (101) is further configured to emulate operation of the jitter buffer (303) by computing a buffer fill level threshold.

14. The radio network node (100) according to any one of Claims 10-13 wherein the processor (101) is configured to emulate operation of the jitter buffer (303) by reducing an emulated play-out rate responsive to a minimum buffer level threshold exceeding the emulated buffer fill level, and/or by increasing an emulated play-out rate responsive to an emulated buffer fill level exceeding a maximum buffer level threshold.

15. The radio network node (100) according to any one of Claims 10-14 wherein the packet communications comprise Voice over Internet Protocol, VoIP, packet communications, and wherein the data packet transmissions comprise VoIP data packet transmissions.

16. The radio network node (100) according to any one of Claims 10-15 wherein the processor (101) is further configured to receive a jitter buffer identifier from the wireless terminal (200) through the transceiver (117) wherein the jitter buffer identifier identifies one of a plurality of jitter buffer types, and wherein the processor (101) is configured to emulate operation of the jitter buffer (303) using an emulator selected responsive to the jitter buffer identifier.

17. The radio network node (100) according to any one of Claims 10-16 wherein the processor is further configured to receive a data packet from a core network (70) for transmission through the transceiver (109) to the wireless terminal (200), to store the data packet in a scheduling buffer (409), to provide an initial scheduling priority for the data packet, to provide an updated scheduling priority for the data packet responsive to the parameter of emulated operation of the jitter buffer for the wireless terminal, and to transmit the data packet from the scheduling buffer over the radio link in accordance with the updated scheduling priority.

## Patentansprüche

1. Verfahren zur Paketübertragung über einen Funkkanal (300) zwischen einem Funknetzwerkknoten (100) und einem drahtlosen Endgerät (200), wobei das drahtlose Endgerät (200) einen Jitter-Puffer (303) beinhaltet, der dazu konfiguriert ist, Jitter zu reduzieren, der durch verschiedene Verzögerungen der am drahtlosen Endgerät (200) empfangenen Datenpakete entsteht, wobei das Verfahren Folgendes umfasst:
Emulieren (703, 705, 717, 707, 719) eines Betriebs des Jitter-Puffers (303) für das drahtlose Endgerät (200) durch den Funknetzwerkknoten als Reaktion auf Datenpaketübermittlungen von dem Funknetzwerkknoten (100) zu dem drahtlosen Endgerät (200) auf Grundlage von Paketlieferinformationen der Datenpaketübermittlungen von dem Funknetzwerkknoten zu dem drahtlosen Endgerät; und
als Reaktion auf Emulieren des Betriebs des Jitter-Puffers (303) für das drahtlose Endgerät (200), Bereitstellen (721) eines Parameters des emulierten Betriebs des Jitter-Puffers (303) durch den Funknetzwerkknoten, einschließlich zumindest eines von einem Vorgang eines emulierten verspäteten Paketverlustes, einem Vorgang einer emulierten Zeitskalierung des drahtlosen Endgeräts, einem emulierten Jitter-Puffer-Füllstand und/oder einem emulierten Jitter-Puffer-Füllstandschwellenwert.

2. Verfahren nach Anspruch 1, wobei das Emulieren des Betriebs des Jitter-Puffers (303) Aktualisieren (801) des emulierten Jitter-Puffer-Füllstands als Reaktion auf Übermitteln eines Datenpakets von dem Funknetzwerkknoten (100) zu dem drahtlosen Endgerät (200) umfasst.

3. Verfahren nach Anspruch 2, wobei das Aktualisieren (801) des emulierten Jitter-Puffer-Füllstands ferner umfasst: Aktualisieren (801) des emulierten Jitter-Puffer-Füllstands als Reaktion auf eine Bestätigungsnachricht und/oder eine negative Bestätigungsnachricht, die von dem drahtlosen Endgerät (200) an dem Funknetzwerkknoten (100) für das Datenpaket empfangen wird.

4. Verfahren nach einem der Ansprüche 1-3, wobei das Emulieren des Betriebs des Jitter-Puffers (303) ferner Berechnen (803) eines Puffer-Füllstandschwellenwerts umfasst.

5. Verfahren nach einem der Ansprüche 1-4, wobei das Emulieren des Betriebs des Jitter-Puffers (303) Reduzieren (915) einer emulierten Umsetzrate als Reaktion darauf, dass ein minimaler Pufferstandschwellenwert den emulierten Puffer-Füllstand überschreitet, und/oder Erhöhen (917) einer emulierten Umsetzrate als Reaktion darauf, dass ein emulierter Puffer-Füllstand einen maximalen Pufferstandschwellenwert überschreitet, umfasst.

6. Verfahren nach einem der Ansprüche 1-5, wobei das Bereitstellen des Parameters des emulierten Jitter-Puffers (303) Generieren eines Protokolls umfasst, einschließlich zumindest eines von Vorgängen eines emulierten verspäteten Paketverlustes, Vorgängen einer emulierten Zeitskalierung, emulierten Jitter-Puffer-Füllständen und/oder emulierten Jitter-Puffer-Füllstandschwellenwerten.

7. Verfahren nach Anspruch 6, wobei das Bereitstellen des Parameters des emulierten Jitter-Puffers ferner Schätzen einer Qualität von Übertragungen umfasst, die an dem drahtlosen Endgerät (200) als Reaktion auf Generieren des Protokolls reproduziert werden.

8. Verfahren nach einem der Ansprüche 1-7, wobei die Paketübertragungen Paketübertragungen mittels Voice-over-Internet-Protokoll (VoIP) umfassen und wobei die Datenpakete VoIP-Datenpakete umfassen.

9. Verfahren nach einem der Ansprüche 1-8, ferner umfassend: Empfangen (506) einer Jitter-Puffer-Kennung an dem Funknetzwerkknoten (100) von dem drahtlosen Endgerät (200), die einen von einer Vielzahl von Jitter-Puffer-Typen identifiziert, wobei das Emulieren des Betriebs des Jitter-Puffers (303) Emulieren des Betriebs des Jitter-Puffers (303) unter Verwendung eines Emulators umfasst, der als Reaktion auf die Jitter-Puffer-Kennung, die an dem Funknetzwerkknoten (100) empfangen wird, ausgewählt wird.

10. Funknetzwerkknoten (100) in einem Funkzugangsnetzwerk (60), das Paketübertragungen bereitstellt, wobei der Funknetzwerkknoten (100) Folgendes umfasst:
einen Transceiver (109), der dazu konfiguriert ist, Übertragungen über einen Funkkanal (300) zwischen dem Funknetzwerkknoten (100) und einem drahtlosen Endgerät (200) bereitzustellen, wobei das drahtlose Endgerät (200) einen Jitter-Puffer (303) beinhaltet, der dazu konfiguriert ist, Jitter zu reduzieren, der durch verschiedene Verzögerungen der am drahtlosen Endgerät (200) empfangenen Datenpakete entsteht; und
einen Prozessor (101), der an den Transceiver (109) gekoppelt ist, wobei der Prozessor (101) dazu konfiguriert ist, einen Betrieb des Jitter-Puffers (303) für das drahtlose Endgerät (200) als Reaktion auf Datenpaketübermittlungen von dem Funknetzwerkknoten (100) durch den Transceiver (109) zu dem drahtlosen Endgerät (200) auf Grundlage von Paketlieferinformationen der Datenpaketübermittlungen von dem Funknetzwerkknoten zu dem drahtlosen Endgerät zu emulieren;
und wobei der Prozessor (101) ferner dazu konfiguriert ist, einen Parameters des emulierten Betriebs des Jitter-Puffers (303) bereitzustellen, einschließlich zumindest eines von einem Vorgang eines emulierten verspäteten Paketverlustes, einem Vorgang einer emulierten Zeitskalierung des drahtlosen Endgeräts, einem emulierten Jitter-Puffer-Füllstand und/oder einem emulierten Jitter-Puffer-Füllstandschwellenwert, als Reaktion auf das Emulieren des Betriebs des Jitter-Puffers (303) für das drahtlose Endgerät (200).

11. Funknetzwerkknoten (100) nach Anspruch 10, wobei der Prozessor (101) ferner dazu konfiguriert ist, den Betrieb des Jitter-Puffers (303) durch Aktualisieren des emulierten Jitter-Puffer-Füllstands als Reaktion auf Übermitteln eines Datenpakets von dem Funknetzwerkknoten (100) zu dem drahtlosen Endgerät (200) zu emulieren.

12. Funknetzwerkknoten (100) nach Anspruch 11, wobei der Prozessor (101) dazu konfiguriert ist, den emulierten Jitter-Puffer-Füllstand durch Aktualisieren des emulierten Jitter-Puffer-Füllstands als Reaktion auf eine Bestätigungsnachricht und/oder eine negative Bestätigungsnachricht, die durch den Transceiver (109) von dem drahtlosen Endgerät (200) für das Datenpaket empfangen wird, zu aktualisieren.

13. Funknetzwerkknoten (100) nach einem der Ansprüche 10-12, wobei der Prozessor (101) ferner dazu konfiguriert ist, den Betrieb des Jitter-Puffers (303) durch Berechnen eines Puffer-Füllstandschwellenwerts zu emulieren.

14. Funknetzwerkknoten (100) nach einem der Ansprüche 10-13, wobei der Prozessor (101) dazu konfiguriert ist, den Betrieb des Jitter-Puffers (303) durch Reduzieren einer emulierten Umsetzrate als Reaktion darauf, dass ein minimaler Pufferstandschwellenwert den emulierten Puffer-Füllstand überschreitet, und/oder durch Erhöhen einer emulierten Umsetzrate als Reaktion darauf, dass ein emulierter Puffer-Füllstand einen maximalen Pufferstandschwellenwert überschreitet, zu emulieren.

15. Funknetzwerkknoten (100) nach einem der Ansprüche 10-14, wobei die Paketübertragungen Paketübertragungen mittels Voiceover-Internet-Protokoll (VoIP) umfassen und wobei die Datenpaketübermittlungen VoIP-Datenpaketübermittlungen umfassen.

16. Funknetzwerkknoten (100) nach einem der Ansprüche 10-15, wobei der Prozessor (101) ferner dazu konfiguriert ist, eine Jitter-Puffer-Kennung von dem drahtlosen Endgerät (200) durch den Transceiver (117) zu empfangen, wobei die Jitter-Puffer-Kennung einen von einer Vielzahl von Jitter-Puffer-Typen identifiziert, und wobei der Prozessor (101) dazu konfiguriert ist, den Betrieb des Jitter-Puffers (303) unter Verwendung eines Emulators zu emulieren, der als Reaktion auf die Jitter-Puffer-Kennung ausgewählt wird.

17. Funknetzwerkknoten (100) nach einem der Ansprüche 10-16, wobei der Prozessor ferner dazu konfiguriert ist, ein Datenpaket von einem Kernnetzwerk (70) zur Übermittlung durch den Transceiver (109) an das drahtlose Endgerät (200) zu empfangen, das Datenpaket in einem Scheduling-Puffer (409) zu speichern, eine anfängliche Scheduling-Priorität für das Datenpaket bereitzustellen, als Reaktion auf den Parameter des emulierten Betriebs des Jitter-Puffers für das drahtlose Endgerät eine aktualisierte Scheduling-Priorität für das Datenpaket bereitzustellen und das Datenpaket von dem Scheduling-Puffer über die Funkverbindung gemäß der aktualisierten Scheduling-Priorität zu übertragen.

## Revendications

1. Procédé fournissant des communications par paquets sur un canal sans fil (300) entre un noeud de réseau radio (100) et un terminal sans fil (200), dans lequel le terminal sans fil (200) comprend un tampon d'instabilité (303) configuré pour réduire l'instabilité résultant de différents retards de paquets de données reçus au niveau du terminal sans fil (200), le procédé comprenant :
l'émulation, (703, 705, 717, 707, 719), par le noeud de réseau radio, du fonctionnement du tampon d'instabilité (303) pour le terminal sans fil (200) en réponse aux transmissions de paquets de données du noeud de réseau radio (100) au terminal sans fil (200) sur la base d'informations de livraison de paquets des transmissions de paquets de données du noeud de réseau radio au terminal sans fil ; et
en réponse à l'émulation du fonctionnement du tampon d'instabilité (303) pour le terminal sans fil (200), la fourniture (721), par le noeud de réseau radio, d'un paramètre de fonctionnement émulé du tampon d'instabilité (303) comprenant au moins l'un d'un cas de perte de paquet tardif émulée, d'un cas de changement d'échelle temporelle terminale sans fil émulé, d'un niveau de remplissage de tampon d'instabilité émulé et/ou d'un seuil de niveau de remplissage de tampon d'instabilité émulé.

2. Procédé selon la revendication 1, dans lequel l'émulation du fonctionnement du tampon d'instabilité (303) comprend la mise à jour (801) du niveau de remplissage de tampon d'instabilité émulé en réponse à la transmission d'un paquet de données du noeud de réseau radio (100) au terminal sans fil (200).

3. Procédé selon la revendication 2, dans lequel la mise à jour (801) du niveau de remplissage de tampon d'instabilité émulé comprend en outre : la mise à jour (801) du niveau de remplissage de tampon d'instabilité émulé en réponse à un message d'accusé de réception et/ou à un message d'accusé de réception négatif reçu au niveau du noeud de réseau radio (100) du terminal sans fil (200) pour le paquet de données.

4. Procédé selon l'une quelconque des revendications 1 à 3, dans lequel l'émulation du fonctionnement du tampon d'instabilité (303) comprend en outre le calcul (803) d'un seuil de niveau de remplissage de tampon.

5. Procédé selon l'une quelconque des revendications 1 à 4, dans lequel l'émulation du fonctionnement du tampon d'instabilité (303) comprend la réduction (915) d'un taux de lecture émulé en réponse à un seuil de niveau de tampon minimal dépassant le niveau de remplissage de tampon émulé, et/ou l'augmentation (917) d'un taux de lecture émulé en réponse à un niveau de remplissage de tampon émulé dépassant un seuil de niveau de tampon maximal.

6. Procédé selon l'une quelconque des revendications 1 à 5, dans lequel la fourniture du paramètre du tampon d'instabilité émulé (303) comprend la génération d'un journal comprenant au moins les uns des cas de perte de paquet tardif émulée, des cas de changement d'échelle temporelle émulé, des niveaux de remplissage de tampon d'instabilité émulé et/ou des seuils de niveau de remplissage de tampon d'instabilité émulé.

7. Procédé selon la revendication 6, dans lequel la fourniture du paramètre du tampon d'instabilité émulé comprend en outre l'estimation d'une qualité des communications reproduites au niveau du terminal sans fil (200) en réponse à la génération du journal.

8. Procédé selon l'une quelconque des revendications 1 à 7, dans lequel les communications par paquets comprennent des communications par paquets Voix sur protocole Internet, VoIP, et dans lequel les paquets de données comprennent des paquets de données VoIP.

9. Procédé selon l'une quelconque des revendications 1 à 8, comprenant en outre : la réception (506) d'un identificateur de tampon d'instabilité au niveau du noeud de réseau radio (100) en provenance du terminal sans fil (200) identifiant l'un d'une pluralité de types de tampons d'instabilité, dans lequel l'émulation du fonctionnement du tampon d'instabilité (303) comprend l'émulation du fonctionnement du tampon d'instabilité (303) à l'aide d'un émulateur sélectionné en réponse à l'identificateur de tampon d'instabilité reçu au niveau du noeud de réseau radio (100).

10. Noeud de réseau radio (100) dans un réseau d'accès radio (60) fournissant des communications par paquets, le noeud de réseau radio (100) comprenant :
un émetteur-récepteur (109) configuré pour fournir des communications sur un canal sans fil (300) entre le noeud de réseau radio (100) et un terminal sans fil (200), dans lequel le terminal sans fil (200) comprend un tampon d'instabilité (303) configuré pour réduire l'instabilité résultant de différents retards de paquets de données reçus au niveau du terminal sans fil (200) ; et
un processeur (101) couplé à l'émetteur-récepteur (109), dans lequel le processeur (101) est configuré pour émuler le fonctionnement du tampon d'instabilité (303) pour le terminal sans fil (200) en réponse aux transmissions de paquets de données du noeud de réseau radio (100) à travers l'émetteur-récepteur 109 au terminal sans fil (200) sur la base d'informations de livraison de paquets des transmissions de paquets de données du noeud de réseau radio au terminal sans fil, et dans lequel
le processeur (101) est en outre configuré pour fournir un paramètre de fonctionnement émulé du tampon d'instabilité (303) comprenant au moins l'un d'un cas de perte de paquet tardif émulée, d'un cas de changement d'échelle temporelle terminale sans fil émulé, d'un niveau de remplissage de tampon d'instabilité émulé et/ou d'un seuil de niveau de remplissage de tampon d'instabilité émulé en réponse à l'émulation du fonctionnement du tampon d'instabilité (303) pour le terminal sans fil (200).

11. Noeud de réseau radio (100) selon la revendication 10, dans lequel le processeur (101) est en outre configuré pour émuler le fonctionnement du tampon d'instabilité (303) par la mise à jour du niveau de remplissage de tampon d'instabilité émulé en réponse à la transmission d'un paquet de données du noeud de réseau radio (100) au terminal sans fil (200).

12. Noeud de réseau radio (100) selon la revendication 11, dans lequel le processeur (101) est configuré pour mettre à jour le niveau de remplissage de tampon d'instabilité émulé par la mise à jour du niveau de remplissage de tampon d'instabilité émulé en réponse à un message d'accusé de réception et/ou à un message d'accusé de réception négatif reçu à travers l'émetteur-récepteur (109) en provenance du terminal sans fil (200) pour le paquet de données.

13. Noeud de réseau radio (100) selon l'une quelconque des revendications 10 à 12, dans lequel le processeur (101) est en outre configuré pour émuler le fonctionnement du tampon d'instabilité (303) par le calcul d'un seuil de niveau de remplissage de tampon.

14. Noeud de réseau radio (100) selon l'une quelconque des revendications 10 à 13, dans lequel le processeur (101) est configuré pour émuler le fonctionnement du tampon d'instabilité (303) par la réduction d'un taux de lecture émulé en réponse à un seuil de niveau de tampon minimal dépassant le niveau de remplissage de tampon émulé, et/ou par l'augmentation d'un taux de lecture émulé en réponse à un niveau de remplissage de tampon émulé dépassant un seuil de niveau de tampon maximal.

15. Noeud de réseau radio (100) selon l'une quelconque des revendications 10 à 14, dans lequel les communications par paquets comprennent des communications par paquets Voix sur protocole Internet, VoIP, et dans lequel les transmissions de paquets de données comprennent des transmissions de paquets de données VoIP.

16. Noeud de réseau radio (100) selon l'une quelconque des revendications 10 à 15, dans lequel le processeur (101) est en outre configuré pour recevoir un identificateur de tampon d'instabilité en provenance du terminal sans fil (200) par l'intermédiaire de l'émetteur-récepteur (117), dans lequel l'identificateur de tampon d'instabilité identifie l'un d'une pluralité de types de tampons d'instabilité, et dans lequel le processeur (101) est configuré pour émuler le fonctionnement du tampon d'instabilité (303) à l'aide d'un émulateur sélectionné en réponse à l'identificateur de tampon d'instabilité.

17. Noeud de réseau radio (100) selon l'une quelconque des revendications 10 à 16, dans lequel le processeur est en outre configuré pour recevoir un paquet de données en provenance d'un réseau central (70) pour une transmission par l'intermédiaire de l'émetteur-récepteur (109) au terminal sans fil (200), pour stocker le paquet de données dans un tampon de planification (409), pour fournir une priorité de planification initiale pour le paquet de données, pour fournir une priorité de planification mise à jour pour le paquet de données en réponse au paramètre de fonctionnement émulé du tampon d'instabilité pour le terminal sans fil, et pour transmettre le paquet de données du tampon de planification sur la liaison radio conformément à la priorité de planification mise à jour.
